# FASCICULE DE BREVET EUROPEEN

(11) **EP 3 983 208 B1**
(45) Date de publication et mention de la délivrance du brevet: **21.06.2023**
(21) Numéro de dépôt: 20743204.8
(22) Date de dépôt: 10.06.2020
(51) Int. Cl.: B29C 70/88, B29C 61/00, B29C 61/06, H01Q 1/08, B29C 61/04, H01Q 1/28, H01Q 1/14, B29K 105/08, B29L 31/30, B29L 31/34

(54) **STRUCTURE TUBULAIRE À MÉMOIRE DE FORME**
RÖHRENFÖRMIGE FORMGEDÄCHTNISSTRUKTUR
SHAPE-MEMORY TUBULAR STRUCTURE

(30) Priorité: 12.06.2019 FR 1906242
(43) Date de publication de la demande: 20.04.2022
(73) Titulaire: Centre National d'Etudes Spatiales, 75039 Paris Cedex 01 (FR)
(72) Inventeur: CADIERGUES, Laurent, 31500 TOUOUSE (FR); PAGNOUX, Hélène, 33114 LE BARP (FR); VEAUDECRENNE, Ellen, 33170 GRADIGNAN (FR); COMBES, Hélène, 31400 TOULOUSE (FR)
(74) Mandataire: Germain Maureau
(86) Numéro de dépôt international: PCT/FR2020/050989
(87) Numéro de publication internationale: WO 2020/249900

(56) Documents cités:
- WO-A1-2018/203334
- CN-A- 109 449 559
- US-B2- 8 808 479
- L Santo: "Shape memory composite antennas for space applications", , 4 mars 2016 (2016-03-04), pages 1-6, XP002798297, Extrait de l'Internet: URL:https://iopscience.iop.org/journal/175 7-899X [extrait le 2020-03-13]

## Description

La présente invention concerne une structure tubulaire composite déployable par effet mémoire de forme.

L'utilisation des polymères à mémoire de forme permet de réaliser des pièces pouvant changer de forme.

Les polymères à mémoire de forme possèdent en effet la capacité de pouvoir être formés dans une première position initiale, d'être déformés mécaniquement dans une deuxième position stable et de retrouver leur position initiale suite à l'application d'un stimulus.

L'un des stimulus préférentiellement utilisé pour permettre aux polymères à mémoire de forme de retrouver leur position initiale est la chaleur. En amenant la température des polymères à mémoire de forme au-dessus de leur température de transition vitreuse, la chaleur libère les contraintes internes des chaînes moléculaires et permet à ces polymères de retrouver leur position initiale.

On connaît de l'art antérieur des pièces formées de polymères à mémoire de forme. L'une des difficultés rencontrées dans la mise en oeuvre de ces pièces réside dans la réalisation d'un système de chauffage qui soit intégré à celles-ci. Traditionnellement le chauffage est réalisé par des réchauffeurs externes comme le chauffage par infrarouge ou l'utilisation de réchauffeurs collés à la pièce.

Le document CN109449559 décrit une structure composite à mémoire de forme comprenant d'une part un mélange de polymère à mémoire de forme et de fibres de carbone pour la tenue structurelle de la structure et d'autre part un film chauffant collé à la structure pour assurer le chauffage de la structure.

La mise en oeuvre de ces pièces à mémoire de forme nécessite de ce fait l'utilisation d'éléments externes chauffant, impliquant à la fois un poids supplémentaire et un coût parfois conséquent.

Il existe donc un besoin de proposer une structure à mémoire de forme dépourvue des moyens de chauffage extérieur de l'art antérieur.

Le document US8808479 décrit un patch de réparation à mémoire de forme comprenant d'une part un mélange de matériau fibreux en combinaison avec un polymère à mémoire de forme pour la tenue structurelle de la structure et d'autre part un moyen de génération thermique composé de fibre pour assurer le chauffage de la structure. L'utilisation de fibres distinctes pour la fonction de tenue structurelle et de réchauffage complexifie la structure à mémoire de forme. Il existe donc un besoin de proposer une structure à mémoire de forme simplifiée. Le document WO 2018/203334 A1 divulgue uns structure tubulaire composite déployable selon le préambule de la revendication 1.

La présente invention vise à pallier les inconvénients ci-dessus, et concerne pour ce faire une structure tubulaire composite déployable par effet mémoire de forme présentant deux extrémités, la structure tubulaire composite déployable par effet mémoire de forme comprenant une unique enveloppe chauffante formée de fibres tressées d'un unique matériau électriquement résistif imprégnées d'une résine à mémoire de forme et définissant un espace intérieur circonscrit par l'enveloppe chauffante, les fibres tressées imprégnées assurant un déploiement autonome de la structure composite tubulaire et assurant une tenue structurelle de la structure en position déployée.

La structure composite présente ainsi un renfort chauffant constitué par l'unique enveloppe chauffante.

La structure déployable selon l'invention est configurée pour occuper une position rétractée lorsqu'une force mécanique lui est appliquée et pour s'étendre de manière autonome à partir de la position rétractée vers une position déployée lorsque celle-ci est chauffée.

Par matériau électriquement résistif on entend tout matériau présentant une certaine résistance apte à créer de la chaleur par effet joule lorsqu'un courant électrique passe en son sein, de préférence le matériau électriquement résistif est le carbone.

Grâce à la structure composite tubulaire selon l'invention, le système de chauffage est intégré dans la structure composite déployable.

Par unique enveloppe chauffante on entend que la structure tubulaire comprend une unique enveloppe utilisée pour réchauffer la structure tubulaire.

La structure tubulaire à mémoire de forme est ainsi dépourvue des moyens de chauffage externes de l'art antérieur tels que le chauffage par infrarouge ou l'utilisation de réchauffeurs collés structure tubulaire.

Par fibres tressées d'un unique matériau, on entend que l'enveloppe chauffante ne comprend pas de fibres distinctes utilisées d'une part pour la fonction de renfort et d'autre part pour la fonction de chauffage.

L'unique matériau qui constitue les fibres tressées de l'unique enveloppe chauffante assure à la fois la fonction de renfort structurel et la fonction de chauffage.

La structure tubulaire est utilise les fibres tressées du matériau électriquement résistif en tant que renfort structurel et en tant que système de réchauffage.

La structure tubulaire diffère ainsi des structures composites de l'art antérieur en ce qu'elle ne comprend pas d'une part des fibres de renfort assurant la tenue structurelle de la structure et d'autre part des fibres électriquement conductrices pour chauffer la pièce.

La configuration en tresse des fibres permet d'obtenir une structure composite souple et malléable qui permet d'accompagner de façon optimale le déploiement et la rétractation de la structure composite tubulaire lors des phases de changement de position. La configuration en tresse permet également d'assurer une raideur et une tenue mécanique lorsque la structure composite tubulaire est en position rétractée ou déployée.

Selon des modes de réalisation préférés, la structure composite tubulaire comprend une ou plusieurs des caractéristiques suivantes, prises isolément ou selon toute combinaison possible :
Selon une caractéristique, un toron de fibres unidirectionnelles d'un matériau électriquement résistif imprégnées d'une résine à mémoire de forme est agencé dans l'espace intérieur l'enveloppe chauffante formée de fibres tressées d'un matériau électriquement résistif imprégnées d'une résine à mémoire de forme est en contact direct avec ledit toron de fibres. La structure composite présente ainsi un renfort chauffant constitué d'une part par le toron de fibres unidirectionnelles et d'autre part par l'enveloppe.

Cette configuration permet de maximiser la raideur et la tenue structurelle mécanique de la structure composite tubulaire de sorte que celle-ci soit autoportante en position déployée et en position rétractée.

De préférence, le toron est un toron de fibres de carbone.

Selon une autre caractéristique, la structure composite tubulaire comprend une résine à mémoire de forme agencée dans l'espace intérieur, l'enveloppe formée de fibres tressées d'un matériau électriquement résistif est en contact direct avec ladite résine à mémoire de forme.

Selon une autre caractéristique, la structure composite tubulaire comprend une enveloppe d'émission/réception d'un signal radiofréquence formée de fibres tressées d'un matériau électrique imprégnées d'une résine à mémoire de forme et une enveloppe isolante formée de fibres tressées d'un matériau isolant imprégnées d'une résine à mémoire de forme interposée entre l'enveloppe chauffante et l'enveloppe d'émission/réception d'un signal radiofréquence. L'enveloppe isolante permet d'isoler électriquement l'enveloppe d'émission/réception d'un signal radiofréquence de l'enveloppe chauffante.

De préférence, l'enveloppe isolante comprend des fibres de verre.

De préférence, l'enveloppe d'émission/réception d'un signal radiofréquence comprend un mélange de fibres de verre et de cuivre.

Selon une autre caractéristique, la structure composite tubulaire comprend un connecteur électrique fixé à au moins une extrémité de la structure composite tubulaire au niveau des fibres tressées du matériau électriquement résistif.

Ceci permet d'assurer le passage d'un courant électrique entre un générateur de courant et les fibres tressées de l'élément électriquement résistif.

Une application privilégiée de la structure composite tubulaire selon l'invention réside dans son utilisation en aérospatial, en particulier en tant qu'antenne radiofréquence déployable en orbite. Une autre application envisageable pour la structure composite tubulaire selon l'invention est son utilisation dans le déploiement de structures légères telle que les baffles de protection pour instrument optique.

A cet effet, l'invention concerne également une antenne radiofréquence destinée à être montée dans un satellite comprenant au moins une structure composite tubulaire déployable par mémoire de forme selon l'invention. Dans un mode de réalisation, l'antenne comprend quatre structures tubulaires composites déployables par effet mémoire de forme enroulées hélicoïdalement, l'antenne étant configurée pour occuper une position rétractée lors d'un lancement du satellite et pour occuper une position déployée lorsque le satellite est en orbite.

D'autres caractéristiques et avantages de l'invention apparaîtront à la lecture de la description nullement limitative qui suit et des figures annexées qui illustrent de manière schématique plusieurs modes de réalisation d'une structure composite tubulaire selon l'invention.
[Fig. 1] est une vue agrandie en coupe transversale de la structure composite tubulaire selon un premier mode de réalisation de l'invention.
[Fig. 2] est une représentation en position déployée d'une structure composite tubulaire selon un premier mode de réalisation de l'invention.
[Fig. 3] est une représentation en position rétractée d'une structure composite tubulaire selon un premier mode de réalisation.
[Fig. 4] est une vue agrandie en coupe transversale d'une structure composite tubulaire selon un deuxième mode de réalisation.
[Fig. 5] est une vue agrandie en coupe transversale d'une structure composite tubulaire selon un troisième mode de réalisation de l'invention.
[Fig. 6] est une vue en coupe transversale d'une structure tubulaire selon un quatrième mode de réalisation de l'invention.
[Fig. 7] est une représentation schématique d'une antenne en position déployée comprenant quatre structures composites tubulaires selon un mode de réalisation de l'invention.
[Fig. 8] est une représentation schématique d'une antenne en position rétractée comprenant quatre structures composites tubulaires selon un mode de réalisation de l'invention.
[Fig. 9] est une représentation schématique d'une antenne en position déployée selon un mode de réalisation de l'invention.
[Fig. 10] est une représentation schématique d'un outillage de rétractation d'une antenne selon l'invention, qui n'est pas couvert par les revendications 1 à 8.
[Fig. 11] est une représentation en vue agrandie d'un connecteur électrique fixé à une structure composite tubulaire selon l'invention.

Par souci de simplification, les éléments identiques sont repérés par des signes de référence identiques sur l'ensemble des figures.

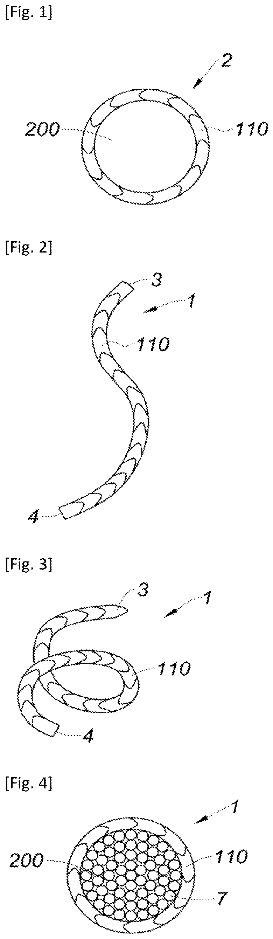

La figure 1 est une vue schématique agrandie en coupe transversale d'une structure composite tubulaire 1 comprenant une unique enveloppe chauffante 110. L'unique enveloppe chauffante est formée de fibres tressées d'un matériau électriquement résistif dans laquelle les fibres sont imprégnées d'une résine à mémoire de forme 110. Les fibres tressées du matériau électriquement résistif de l'unique enveloppe chauffante constituent le système de chauffage de la structure tubulaire. Le système de chauffage est ainsi intégré dans la structure composite tubulaire.

La configuration en fibre tressées permet d'assurer le déploiement et la rétractation de la structure composite tubulaire et d'assurer la tenue structurelle de cette dernière dans ses positions déployée et rétractée. Ainsi l'unique enveloppe chauffante 110 a un effet combiné de chauffage et de tenue structurelle de la structure composite tubulaire 1.

De préférence, le matériau électriquement résistif est le carbone.

La résine à mémoire de forme est réalisée à partir de polymères à mémoire de forme selon des procédés de fabrication bien connus de l'homme du métier.

Les polymères particulièrement préférés pour la préparation de la résine sont choisis dans la famille des thermodurcissables.

L'enveloppe chauffante 110 définit un espace intérieur 200. Dans ce premier mode de réalisation, l'espace intérieur 200 est vide.

La figure 2 est une représentation d'une structure composite tubulaire 1 en position déployée c'est-à-dire dans une position initiale. La position initiale correspond à la position dans laquelle la structure composite tubulaire a été fabriquée. Dans le présent exemple, la structure composite tubulaire 1 présente une forme hélicoïdale.

La figure 3 est une représentation de la structure composite tubulaire 1 en position rétractée. Cette position rétractée constitue, dans la plupart des applications, un état temporaire de la structure composite tubulaire qui peut être utile par exemple pour le stockage de la structure composite tubulaire.

Le passage de la position déployée à la position rétractée est réalisé en chauffant la structure composite tubulaire 1 puis en lui appliquant une force mécanique telle une compression. Le chauffage est réalisé en faisant passer un courant électrique dans les fibres tressées du matériau électriquement résistif de l'unique enveloppe chauffante 110. Les fibres créent de la chaleur par effet joule et chauffent la résine à mémoire de forme. L'application de la force mécanique permet de rétracter la structure composite tubulaire 1. La force mécanique est maintenue jusqu'à refroidissement de la résine à mémoire de forme en dessous de sa température de transition vitreuse. La force mécanique est retirée et les contraintes mécaniques appliquées à la résine à mémoire de forme assurent le maintien des fibres tressées et à fortiori de la structure composite tubulaire dans une position rétractée de manière stable.

Le retour à la position initiale de la structure composite tubulaire 1 c'est-à-dire dans sa position déployée, est réalisé par chauffage de la résine à mémoire de forme au-delà de sa température de transition vitreuse, sans utilisation d'une quelconque force mécanique. Pour ce faire, un courant électrique passe à l'intérieur des fibres tressées du matériau électriquement résistif de l'enveloppe chauffante. Le chauffage des fibres permet de libérer les contraintes mécaniques appliquées à la résine. La résine se détend et détend avec elle les fibres tressées du matériau électriquement résistif qui assurent la tenue structurelle de la structure. La structure composite tubulaire 1 se déploie et retrouve ainsi sa position initiale (représentée en figure 2).

La figure 4 est une vue en coupe transversale d'une structure composite tubulaire 1 comprenant l'unique enveloppe chauffante 110 formée de fibres tressées d'un matériau électriquement résistif imprégnées d'une résine à mémoire de forme, définissant un espace intérieur 200.

La structure composite tubulaire 1 comprend également un toron 7 de fibres d'un matériau électriquement résistif, de préférence le matériau électriquement résistif est le carbone. Le toron a ainsi une action chauffante lorsqu'il est parcouru par un courant électrique. Par toron de fibres on entend un assemblage de fibres unidirectionnelles qui peuvent être droites ou former une torsion. Le toron 7 de fibres est imprégné de résine à mémoire de forme. Le toron 7 de fibres est agencé dans l'espace intérieur 200 et est enveloppé par l'enveloppe chauffante 110 formée de fibres tressées d'un matériau électriquement résistif imprégnées d'une résine à mémoire de forme 110, l'enveloppe chauffante 110 est en contact direct avec le toron 7 de fibres. Le toron 7 de fibres confère également une tenue structurelle à la structure composite tubulaire 1 de sorte que celle-ci soit autoportante en position déployée. De préférence, la résine à mémoire de forme utilisée pour imprégner les fibres du toron 7 est la même que celle utilisée pour imprégner les fibres tressées de l'enveloppe chauffante 110. Ceci permet d'avoir un déploiement homogène entre le toron 7 de fibres et l'enveloppe chauffante 110.

Dans une variante (non représentée), la structure composite tubulaire comprend une résine à mémoire de forme agencée dans l'espace 200. Dans cette variante l'enveloppe 110 formée de fibres tressées d'un matériau électriquement résistif est en contact direct avec la résine à mémoire de forme. De préférence, la résine à mémoire de forme agencée dans l'espace intérieur 200 est la même que celle utilisée pour imprégner les fibres tressées de l'enveloppe 110.

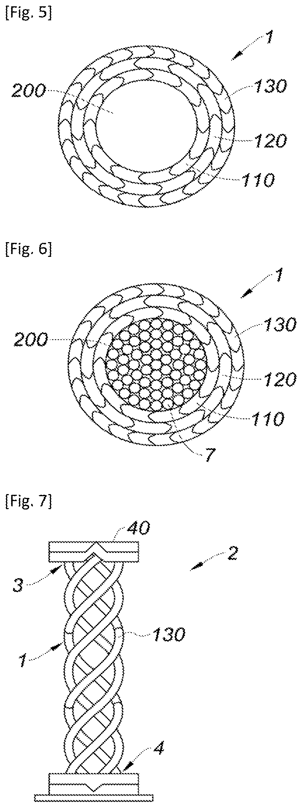

La figure 5 est une vue schématique en coupe transversale d'une structure composite tubulaire 1 comprenant une enveloppe chauffante 110 formée de fibres tressées d'un matériau électriquement résistif imprégnées d'une résine à mémoire de forme et définissant un espace intérieur 200 circonscrit par l'enveloppe chauffante 110.

La structure composite tubulaire comprend également une enveloppe d'émission/réception d'un signal radiofréquence 130 formée de fibres tressées d'un matériau électriquement conducteur imprégnées d'une résine à mémoire de forme. L'enveloppe d'émission/réception d'un signal radiofréquence comprend par exemple un mélange de fibres de verre et de cuivre.

La structure composite tubulaire 1 comprend de plus une enveloppe isolante 120 formée de fibres tressées d'un matériau isolant imprégnées d'une résine à mémoire de forme. L'enveloppe isolante comprend par exemple du verre. L'enveloppe isolante 120 est interposée entre l'enveloppe chauffante 110 formée de fibres tressées d'un matériau électriquement résistif imprégnées d'une résine à mémoire de forme et l'enveloppe d'émission/ réception d'un signal radiofréquence 130 et permet d'isoler électriquement ces enveloppes 110, 130.

En fonctionnement, un courant électrique passe à l'intérieur des fibres tressées du matériau électriquement résistif de l'unique enveloppe chauffante 110 formée de fibres tressées d'un matériau électriquement résistif imprégnées d'une résine à mémoire de forme. Le chauffage des fibres entraine le chauffage de la résine de l'enveloppe chauffante 110 ainsi que le chauffage des résines à mémoire de forme de l'enveloppe d'émission/ réception d'un signal radiofréquence 130 et de l'enveloppe isolante 120.

Dans le présent exemple, l'enveloppe d'émission/réception d'un signal radiofréquence 130 est directement en contact avec l'enveloppe isolante 120 et l'enveloppe isolante 120 est directement en contact avec l'enveloppe chauffante 110 formée de fibres tressées d'un matériau électriquement résistif imprégnées d'une résine à mémoire de forme. La résine à mémoire de forme utilisée est la même pour chaque enveloppe.

De préférence, la résine à mémoire de forme utilisée pour imprégner les fibres des enveloppes 110, 120 et 130 est la même. Ceci permet d'avoir un déploiement homogène des enveloppes 110, 120 et 130.

Dans un mode de réalisation (présenté en figure 6), la structure composite tubulaire comprend en plus de l'enveloppe chauffante 110 formée de fibres tressées d'un matériau électriquement résistif imprégnées d'une résine à mémoire de forme, de l'enveloppe isolante 120 et de l'enveloppe d'émission/ réception d'un signal 130, un toron 7 de fibres agencé dans l'espace 200. L'enveloppe chauffante 110 est de préférence directement en contact avec le toron 7 de fibres.

De préférence, la résine à mémoire de forme utilisée pour imprégner les fibres des enveloppes 110, 120 et 130 et du toron 7 de fibres est la même. Ceci permet d'avoir un déploiement homogène du toron 7 de fibres et des enveloppes 110, 120, 130.

Une application des structures composites tubulaires illustrées aux figures 5 et 6 réside dans leur utilisation en aérospatial, en particulier dans le lancement de satellite.

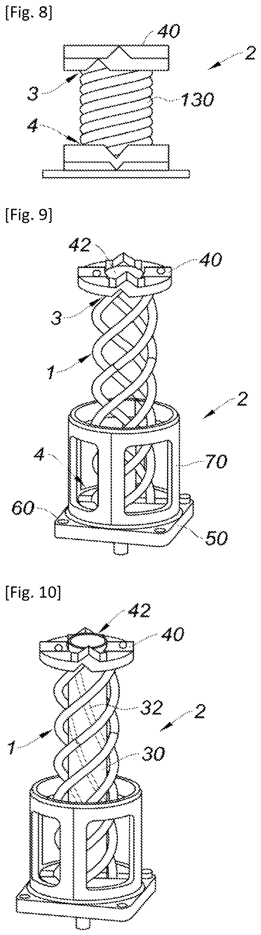

Les figures 7 et 8 représentent respectivement une antenne radiofréquence 2 en position déployée et en position rétractée. L'antenne 2 est formée de quatre structures composites tubulaires 1 comprenant deux extrémités 3, 4, une enveloppe chauffante 110 (non visible) formée de fibres tressées d'un matériau électriquement résistif imprégnées d'une résine à mémoire de forme et définissant un espace intérieur 200, une enveloppe d'émission/réception d'un signal radiofréquence 130 formée de fibres tressées d'un matériau électriquement conducteur imprégnées d'une résine à mémoire de forme et une enveloppe isolante 120 (non visible) formée de fibres tressées d'un matériau isolant imprégnées d'une résine à mémoire de forme interposée entre l'enveloppe chauffante 110 et l'enveloppe d'émission/ réception d'un signal radiofréquence 130.

Les structures tubulaires peuvent également comprendre un toron de fibres unidirectionnelles d'un matériau électriquement résistif imprégnées d'une matrice à mémoire de forme

L'antenne 2 est configurée pour occuper une position rétractée lors d'un lancement du satellite et pour occuper une position déployée lorsque le satellite est en orbite.

En fonctionnement, le satellite est lancé avec l'antenne en position rétractée (figure 8). Une fois en orbite, l'antenne est chauffée et retrouve sa forme déployée (figure 7) grâce à la mémoire de forme de la résine qui imprègne les fibres tressées de chacune des enveloppes.

Dans un mode de réalisation (représenté en figure 9), l'antenne 2 comprend également une cage 70 muni d'un fond plat fixé sur un châssis 60, un socle inférieur 50 fixé sur le fond plat de la cage 70 et un socle supérieur 40 comportant une ouverture 42 configurée pour permettre un passage d'un outillage de rétractation. Chaque structure composite tubulaire 1 s'étend entre le socle inférieur 50 et le socle supérieur 40. Les socles permettent de maintenir les structures composites tubulaires en position dans la cage 70 et de maintenir un écartement entre les structures composites tubulaires.

La figure 10 représente un outillage de rétractation 30 prévu pour rétracter les structures composites tubulaires 1 de l'antenne 2. L'outillage de rétraction, qui n'est pas couvert par l'objet des revendications 1 à 8, 30 est constitué d'un axe central qui s'étend à partir du socle inférieur 50 jusqu'au socle supérieur 40 comportant l'ouverture 42.

L'outillage de rétractation 30 est amovible et comprend au moins une rainure 32 hélicoïdale. Dans le présent exemple, l'outillage de rétractation 30 comprend quatre rainures hélicoïdales, de forme préférentiellement cylindrique.

En fonctionnement, L'outillage de rétractation 30 est placé au centre de l'antenne 2 à la suite de son passage dans l'ouverture 42 du socle supérieur 40 prévue à cet effet.

La résine à mémoire de forme des structures composites tubulaires est chauffée grâce à un courant électrique qui passe à l'intérieur des fibres tressées du matériau électriquement résistif. Une fois la température de transition vitreuse de la résine à mémoire de forme dépassée, le socle supérieur 40 est déplacé sur l'outillage de rétractation 30 en direction du châssis. A cet effet, le socle supérieur 40 comporte quatre doigts (non visibles) configurés pour s'engager dans les quatre rainures 32 de l'outillage de rétractation 30. Les rainures 32 hélicoïdales permettent ainsi de guider le socle supérieur 40 lors de son déplacement. Le déplacement du socle supérieur 40 en direction du châssis applique une force mécanique aux structures composites tubulaires. Le socle supérieur 40 compresse et rétracte hélicoïdalement les structures composites tubulaires jusqu'atteindre une position rétractée prédéfinie.

La cage 70 permet en outre de délimiter l'encombrement de l'antenne 2 lors de son passage en position rétractée.

L'antenne 2 obtenue dans sa position rétractée est ensuite refroidie et l'outillage de rétractation amovible 30 est retiré de l'antenne.

L'antenne 2 pourra ensuite retrouver sa position initiale en faisant chauffer la résine à mémoire de forme de chaque structure composite tubulaire 1 au-delà de sa température de transition vitreuse grâce au passage d'un courant électrique dans les fibres tressées du matériau électriquement résistif de l'enveloppe chauffante 110 formée de fibres tressées d'un matériau électriquement résistif. Le passage de la position rétractée à la position déployée des structures composites tubulaires ne nécessite pas d'application d'une quelconque force mécanique.

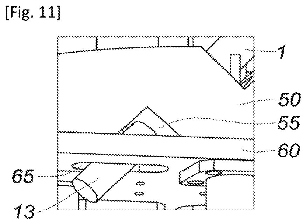

La figure 11 est une vue agrandie d'un connecteur électrique 13 fixé à une extrémité d'une structure composite tubulaire. Le connecteur électrique 13 permet de relier un générateur de courant électrique à la structure composite tubulaire. Le connecteur électrique est fixé aux fibres du matériau électriquement résistif de l'enveloppe 110 de la structure composite tubulaire. Lorsque la structure composite tubulaire comprend également un toron 7 de fibres d'un matériau électriquement résistif, le connecteur électrique est également fixé aux fibres de ce toron 7.

Dans la configuration d'antenne hélicoïdale représentée aux figures 9 et 10, le connecteur électrique est agencé au niveau d'ouvertures 55, 65 formées respectivement dans le socle inférieur 50 et le châssis 60 de l'antenne 2.

Dans les différents modes de réalisation qui viennent d'être décrits, la structure composite tubulaire présente un système de chauffage intégré à la structure composite qui permet d'obtenir un déploiement par simple passage de courant dans cette dernière et de ne plus faire appel aux dispositifs de chauffage externes de l'art antérieur.

## Revendications

1. Structure composite tubulaire (1) déployable par effet mémoire de forme présentant deux extrémités (3, 4), la structure composite tubulaire déployable par effet mémoire de forme (1) comprenant une unique enveloppe chauffante formée de fibres d'un unique matériau électriquement résistif imprégnées d'une résine à mémoire de forme (110) et définissant un espace intérieur (200) circonscrit par l'enveloppe chauffante (110), les fibres assurant un déploiement autonome de la structure composite tubulaire et assurant une tenue structurelle de la structure en position déployée et rétractée, **caractérisée en ce que** les fibres sont tressées.

2. Structure composite tubulaire déployable par effet mémoire de forme (1) selon la revendication 1 comprenant un toron (7) de fibres unidirectionnelles d'un matériau électriquement résistif imprégnées d'une matrice à mémoire de forme agencé dans l'espace intérieur (200), l'enveloppe chauffante (110) étant en contact direct avec ledit toron (7) de fibres.

3. Structure composite tubulaire déployable par effet mémoire de forme (1) selon l'une des revendications précédentes comprenant une enveloppe d'émission/ réception d'un signal radiofréquence (130) formée de fibres tressées d'un matériau électriquement conducteur imprégnées d'une résine à mémoire de forme et une enveloppe isolante (120) formée de fibres tressées d'un matériau isolant imprégnées d'une résine à mémoire de forme interposée entre l'enveloppe chauffante (110) formée de fibres tressées d'un matériau électriquement résistif imprégnées d'une résine à mémoire de forme et l'enveloppe d'émission/ réception d'un signal radiofréquence (130).

4. Structure composite tubulaire déployable par effet mémoire de forme (1) selon la revendication 3 dans laquelle l'enveloppe isolante (120) comprend des fibres de verre.

5. Structure composite tubulaire déployable par effet mémoire de forme (1) selon la revendication 3 dans laquelle l'enveloppe d'émission/ réception d'un signal radiofréquence (130) comprend un mélange de fibres de verre et de cuivre.

6. Structure composite tubulaire déployable par effet mémoire de forme (1) selon l'une des revendications précédentes comprenant un connecteur électrique (13) fixé à au moins une extrémité (3, 4) de la structure tubulaire déployable par effet mémoire de forme (1) au niveau des fibres tressées du matériau électriquement résistif.

7. Antenne radiofréquence 2 destinée à être montée dans un satellite comprenant au moins une structure composite tubulaire déployable par mémoire de forme (1) selon l'une des revendications 3 à 6.

8. Antenne radiofréquence 2 destinée à être montée dans un satellite selon la revendication 7 caractérisé en que l'antenne comprend quatre structures composites tubulaires déployables par effet mémoire de forme (1) enroulées hélicoïdalement, l'antenne 2 étant configurée pour occuper une position rétractée lors d'un lancement du satellite et pour occuper une position déployée lorsque le satellite est en orbite .

## Patentansprüche

1. Durch Formgedächtniswirkung ausfahrbare röhrenförmige Verbundstruktur (1), welche Enden (3, 4) aufweist, wobei die durch Formgedächtniswirkung ausfahrbare röhrenförmige Verbundstruktur (1) eine einzige Heizhülle umfasst, die aus Fasern aus einem einzigen elektrisch resistiven Material gebildet ist, die mit einem Harz mit Formgedächtnis (110) imprägniert sind, und einen Innenraum (200) definieren, der durch die Heizhülle (110) umschrieben ist, wobei die Fasern für ein eigenständiges Ausfahren der röhrenförmigen Verbundstruktur sorgen, und für eine strukturelle Haltung der Struktur in der ausgefahrenen und eingefahrenen Position sorgen, **dadurch gekennzeichnet, dass** die Fasern geflochten sind.

2. Durch Formgedächtniswirkung ausfahrbare röhrenförmige Verbundstruktur (1) nach Anspruch 1, eine Litze (7) aus unidirektionalen Fasern aus einem elektrisch resistiven Material umfassend, die mit einer Matrix mit Formgedächtnis imprägniert sind, die in dem Innenraum (200) angeordnet ist, wobei die Heizhülle (110) in direktem Kontakt mit der Faserlitze (7) ist.

3. Durch Formgedächtniswirkung ausfahrbare röhrenförmige Verbundstruktur (1) nach einem der vorstehenden Ansprüche, eine Hülle zum Senden/Empfangen eines Funkfrequenzsignals (130) umfassend, die aus geflochtenen Fasern aus einem elektrisch leitfähigen Material gebildet wird, die mit einem Harz mit Formgedächtnis imprägniert sind, und eine Isolierhülle (120), die aus geflochtenen Fasern aus einem Isoliermaterial gebildet wird, die mit einem Harz mit Formgedächtnis imprägniert sind, die zwischen der Heizhülle (110), die aus geflochtenen Fasern aus einem elektrisch resistiven Material gebildet wird, die mit einem Harz mit Formgedächtnis imprägniert sind, und der Hülle zum Senden/Empfangen eines Funkfrequenzsignals (130) eingesetzt ist.

4. Durch Formgedächtniswirkung ausfahrbare röhrenförmige Verbundstruktur (1) nach Anspruch 3, wobei die Isolierhülle (120) Glasfasern umfasst.

5. Durch Formgedächtniswirkung ausfahrbare röhrenförmige Verbundstruktur (1) nach Anspruch 3, wobei die Hülle zum Senden/Empfangen eines Funkfrequenzsignals (130) ein Gemisch aus Glasfasern und Kupfer umfasst.

6. Durch Formgedächtniswirkung ausfahrbare röhrenförmige Verbundstruktur (1) nach einem der vorstehenden Ansprüche, umfassend eine elektrische Steckverbindung (13), die an mindestens einem Ende (3, 4) der durch Formgedächtniswirkung ausfahrbaren röhrenförmigen Verbundstruktur (1) im Bereich der geflochtenen Fasern des elektrisch resistiven Materials befestigt ist.

7. Funkfrequenzantenne 2, die dazu bestimmt ist, in einem Satelliten angebracht zu werden, mindestens eine durch Formgedächtniswirkung ausfahrbare röhrenförmige Verbundstruktur (1) nach einem der Ansprüche 3 bis 6 umfassend.

8. Funkfrequenzantenne 2, die dazu bestimmt ist, in einem Satelliten angebracht zu werden, nach Anspruch 7, **dadurch gekennzeichnet, dass** die Antenne vier schraubenförmig eingerollte, durch Formgedächtniswirkung ausfahrbare röhrenförmige Verbundstrukturen (1) umfasst, wobei die Antenne 2 konfiguriert ist, um bei einem Abschuss des Satelliten eine eingefahrene Position einzunehmen, und, wenn sich der Satellit in der Umlaufbahn befindet, eine ausgefahrene Position einzunehmen.

## Claims

1. A tubular composite structure (1) deployable by shape-memory effect having two ends (3, 4), the tubular composite structure deployable by shape-memory effect (1) comprising a single heating envelope formed of fibers of a single electrically resistive material, impregnated with a shape-memory resin (110) and defining an interior space (200) circumscribed by the heating envelope (110), the fibers ensuring an autonomous deployment of the tubular composite structure and ensuring structural integrity of the structure in the deployed and retracted position, **characterized in that** the fibers are braided.

2. The tubular composite structure deployable by shape-memory effect (1) according to claim 1 comprising a strand (7) of unidirectional fibers of an electrically resistive material, impregnated with a shape-memory matrix arranged in the interior space (200), the heating envelope (110) being in direct contact with said strand (7) of fibers.

3. The tubular composite structure deployable by shape-memory effect (1) according to any of the preceding claims comprising an envelope for transmitting/receiving a radiofrequency signal (130) formed of braided fibers of an electrically conductive material impregnated with a shape-memory resin and an insulating envelope (120) formed of braided fibers of an insulating material impregnated with a shape-memory resin interposed between the heating envelope (110) formed of braided fibers of an electrically resistive material impregnated with a shape-memory resin and the envelope for transmitting/receiving a radiofrequency signal (130).

4. The tubular composite structure deployable by shape-memory effect (1) according to claim 3 wherein the insulating envelope (120) comprises glass fibers.

5. The tubular composite structure deployable by shape-memory effect (1) according to claim 3, wherein the envelope for transmitting/receiving a radiofrequency signal (130) comprises a mixture of glass fibers and copper.

6. The tubular composite structure deployable by shape-memory effect (1) according to any of the preceding claims, comprising an electrical connector (13) fastened to at least one end (3, 4) of the tubular structure deployable by shape-memory effect (1) at the braided fibers of the electrically resistive material.

7. A radiofrequency antenna 2 intended to be mounted in a satellite comprising at least one tubular composite structure deployable by shape memory (1) according to any of claims 3 to 6.

8. The radiofrequency antenna 2 intended to be mounted in a satellite according to claim 7 **characterized in that** the antenna comprises four helically wound tubular composite structures deployable by shape-memory effect (1), the antenna 2 being configured to occupy a retracted position during a satellite launch and to occupy a deployed position when the satellite is in orbit.
